# EUROPÄISCHE PATENTSCHRIFT

(11) **EP 3 218 291 B1**
(45) Veröffentlichungstag und Bekanntmachung des Hinweises auf die Patenterteilung: **22.07.2020**
(21) Anmeldenummer: 15804692.0
(22) Anmeldetag: 13.11.2015
(51) Int. Cl.: B65G 67/08

(54) **VERFAHREN ZUM BELADEN VON LADEFLÄCHEN UND BELADEEINRICHTUNG**
METHOD FOR LOADING SURFACES TO BE LOADED, AND LOADING DEVICE
PROCÉDÉ POUR LE CHARGEMENT DE PLATES-FORMES DE CHARGEMENT ET DISPOSITIF DE CHARGEMENT

(30) Priorität: 14.11.2014 DE 102014116725
(43) Veröffentlichungstag der Anmeldung: 20.09.2017
(73) Patentinhaber: Haver & Boecker OHG, 59302 Oelde (DE)
(72) Erfinder: VOLLENKEMPER, Willi, 59302 Oelde (DE); HOLDER, Frédéric, F-68890 Meyenheim (FR)
(74) Vertreter: BSB Patentanwälte Schütte & Engelen Partnerschaft mbB
(86) Internationale Anmeldenummer: PCT/EP2015/076549
(87) Internationale Veröffentlichungsnummer: WO 2016/075286

(56) Entgegenhaltungen:
- EP-A2- 0 764 600
- EP-A2- 1 764 304
- WO-A1-2004/050518
- WO-A2-2012/088437
- DE-A1- 3 118 803
- DE-A1-102007 014 239
- DE-A1-102011 116 535
- US-A- 3 885 682

## Beschreibung

Die vorliegende Erfindung betrifft eine Vorrichtung und ein Verfahren zum Beladen von Ladeflächen von Transportmitteln mit Transportgütern wie Säcken oder anderen Stückgütern. Neben der Beladung von LKW mit Säcken ist auch die Beladung von z. B. Containern, Eisenbahnwaggons oder Schiffen möglich. Obwohl die Erfindung nicht darauf beschränkt ist, so ist sie insbesondere für den Einsatz bei der Beladung von LKW oder dgl. mit Säcken geeignet, die mit Schüttgütern gefüllt sind.

Bei der Abfüllung von Zement in Säcke werden oftmals rotierende Packmaschinen eingesetzt, die über 6, 8, 12 oder sogar 16 Füllstutzen verfügen. Bei der Rotation der Packmaschine werden von Hand oder automatisch Säcke auf die Füllstutzen aufgeschoben bzw. aufgeschossen, während einer Umdrehung gefüllt und schließlich automatisiert abgeworfen. Die abgeworfenen Säcke werden gegebenenfalls hinsichtlich ihres Gewichtes noch einmal überprüft und über Transportbänder zu einer Vorrichtung zum Beladen von Transportmitteln mit den abgefüllten Säcken transportiert.

Im Stand der Technik sind verschiedenste Verfahren und Beladeeinrichtungen bekannt geworden, um beispielsweise die Ladeflächen von Lkw mit Säcken zu beladen.

Ursprünglich wurden LKW manuell beladen. Zur Entlastung wurden und werden heute noch Systeme eingesetzt, bei denen die Säcke über ein Zuführband antransportiert werden.

Bei einfachen und kostengünstigen Systemen zur Beladung der Ladeflächen von Lkw mit einzelnen Säcken werden meist Vorrichtungen eingesetzt, bei denen ein Zuführband die Säcke zu auf der Ladefläche stehenden Bedienpersonen transportiert. Die auf der Ladefläche stehende Person nimmt den Sack entgegen und legt den Sack manuell auf der Ladefläche ab. Dabei werden die Säcke eine Reihe nach der anderen abgelegt. Um die Arbeit zu erleichtern, ist das Zuführband meist um einen gewissen Winkelbetrag schwenkbar ausgeführt, sodass die Bedienungsperson die ankommenden Säcke nicht einzeln ergreifen, anheben und umsetzen muss, sondern den Schwung des ankommenden Sacks ausnützt und an der gewünschten Stelle positioniert. Auch wenn durch die Ausnutzung des Schwungs die Arbeit erheblich erleichtert wird, so ist die körperliche Belastung im Laufe der Zeit doch groß, da je nach Stellung des Bandes unterschiedlich weite Wege und eine überlagerte Drehung des Sackes erforderlich sind, um den Sack korrekt zu positionieren. Das muss je nach Ablagehöhe in gebückter oder gestreckter Haltung erfolgen. Derartige Systeme sind in der Anschaffung kostengünstig, haben aber durch den hohen körperlichen Einsatz Nachteile.

Mit der DE 31 18 803 A1 ist ein Verfahren zum Be- und Entladen von Ladeflächen mit einem Zuförderer bekannt geworden, wobei der Abgabekopf horizontal in Längsrichtung verschiebbar ist. Der Abgabekopf ist auch vertikal beweglich, um eine vorgegebene Ladefläche zu beladen. Bei der ersten Beladung einer vorgegebenen Ladefläche sind zwei Bedienpersonen nötig, wobei eine erste Bedienperson den Zuförderer in Längsrichtung und in vertikaler Richtung so führt, dass der Abgabekopf in eine Position gelangt, in der eine zweite Bedienperson das Ladegut von dem Abgabekopf nacheinander abnehmen und die Ladefläche beladen kann. Die Längsbewegung und die Vertikalbewegungen des Ladekopfes werden gespeichert, sodass bei spätere Ladevorgängen des gleichen Typs von Ladefläche die erste Bedienperson entfallen kann und nur noch die zweite Bedienperson nötig ist. Die zweite Bedienperson nimmt die Stückgüter manuell von dem Ladekopf ab, dreht sich entsprechend und legt das Stückgut wunschgemäß manuell ab.

Ein automatisches System zum Beladen mit verpackten Produkten ist beispielsweise mit der FR 2 085 385 A1 bekannt geworden, bei dem wenigstens ein Transportband seitlich und wenigstens ein Transportband in der Höhe verschwenkbar ist. Damit wird ohne Verlagerung des zu beladenden Fahrzeugs und ohne Verlagerung der Beladeeinrichtung eine größere Fläche beladen, indem ein Transportband seitlich und ein Transportband in der Höhe verschwenkt wird. Dabei wird eine Charge der Säcke entlang einer Kugelfläche positioniert. Anschließend wird die Beladeeinrichtung um eine Sacklänge weiter bewegt und die nächste Charge wird entlang der sich durch die Schwenkbewegungen geometrisch ergebenden Kugelfläche positioniert. Nachteilig daran ist die relativ ungenaue Positionierung der Säcke übereinander und nebeneinander. In Zeitraum seit der Erfindung der FR 2 085 385 A1 haben sich die Anforderungen an die Raumausnutzung, an die Genauigkeit der Sackpositionierung und an die Stapelqualität erheblich erhöht.

Eine verbesserte automatische Einrichtung zur Verladung von gefüllten Säcken auf ein Transportfahrzeug ist mit der DE 26 33 170 A1 bekannt geworden, bei der der zur Verfügung stehende Raum optimal beladen werden kann. Dazu werden hinter einem in Längsrichtung angeordneten horizontalen Zuförderband zwei seitlich in Querrichtung beabstandete und in Querrichtung verfahrbare Ablagesättel angeordnet. Ein über das Zuförderband antransportierter Sack wird an einen Ablagesattel übergeben, danach in die gewünschte seitliche Position verfahren und dann in eine geneigte Stellung abgeklappt, sodass der Sack von dem Ablagesattel genau an dem gewünschten Stapelort abgegeben wird. Das den Bandförderer tragende Gestell ist in Längsrichtung und in der Höhe verstellbar, sodass eine genaue Positionierung der Säcke und eine vollständige Ausnutzung des zur Verfügung stehenden Raumes ermöglich wird. Es werden durch die genaue Positionierung standfeste Stapel der Säcke erreicht. Nachteilig an diesem Stand der Technik ist aber der erhöhte Aufwand und die relativ langsame Verarbeitung, da das Zuförderband darauf warten muss, bis der Ablagesattel den Sack abgegeben hat und wieder einen Sack übernehmen kann. Durch zwei Ablagesättel mit einem gemeinsamen Zuförderband kann die Geschwindigkeit nur geringfügig erhöht werden. Durch den in Fig. 12 der der DE 26 33 170 A1 erkennbaren Sacküberstand des quer auf dem Ablagesattel liegenden Sacks kann es bei den instabilen, nicht biegesteifen, Säcken zu Deformierungen kommen, die sich auch bei der Ablage nicht oder nur teilweise zurückbilden, was wiederum zu instabilen Stapeln und zu einer volumetrisch verringerten Ladekapazität führen kann.

Die WO 2004/050518 A1 offenbart eine Teleskopfördereinrichtung mit einem teleskopierbaren Fahrkopf und einem Antrieb gemäß dem Oberbegriff von Anspruch 1. Der Fahrkopf ist seitlich und in Längsrichtung verfahrbar.

Die EP 0 764 600 A2 offenbart ein Verfahren nach dem Oberbegriff des Anspruchs 1 und eine Vorrichtung nach dem Oberbegriff des Anspruchs 10.

Es sind auch automatische Systeme bekannt geworden, bei denen eine Beladevorrichtung an einem Ausschnitt einer Decke eines Gebäudes hängt und durch den Ausschnitt hindurch unten stehende offene Lkw und dergleichen mit Säcken belädt. Bei derartigen Systemen wird ein Beladekopf eingesetzt, um Lagenverbünde aus mehreren längs und quer liegenden Säcken vorzupositionieren und dann insgesamt auf der Ladefläche abzulegen. Der Durchsatz ist hoch, aber die Lagenbildung ist aufwendig und auch die Palletierung im Ladekopf führt zu einem hohen konstruktiven Aufwand. Nachteilig ist zudem der große Aufwand auf der Gebäudeseite, da ein separates Gebäudeteil vorgesehen sein muss und da die Beladevorrichtung an der Decke hängend oder oben drüber stehend montiert werden muss. Prinzipbedingt können zudem nur oben offene Transportmittel beladen werden, da der von oben abhängende Beladekopf von oben in den Laderaum eintauchen muss. Container oder oben mit einer Deckplane oder Decke versehene Lkw können nicht beladen werden.

Es ist deshalb die Aufgabe der vorliegenden Erfindung ein flexibles Verfahren zum Beladen von Ladeflächen und eine flexible Beladeeinrichtung zur Verfügung zu stellen, die die körperliche Belastung reduziert und bei einer hohen Stapelqualität und guten Raumausnutzung einen relativ geringen technischen Aufwand erfordert.

Diese Aufgabe wird gelöst, durch ein Verfahren zum Beladen von Ladeflächen mit den Merkmalen des Anspruchs 1 und durch eine Beladeeinrichtung mit den Merkmalen des Anspruchs 10. Bevorzugte Weiterbildungen der Erfindung sind Gegenstand der Unteransprüche. Weitere Vorteile der vorliegenden Erfindung ergeben sich aus der allgemeinen Beschreibung und der Beschreibung der Ausführungsbeispiele.

Ein erfindungsgemäßes Verfahren dient zum Beladen von Ladeflächen von auf einer Transportfläche beweglichen Transportmitteln mit Transportgütern wie Säcken oder anderen Stückgütern. Dabei werden über eine Zuführeinrichtung Transportgüter nacheinander antransportiert und zum Weitertransport einem nachgeschalteten Beschleunigungsförderer übergeben und schließlich an einem Abgabeende einer Abgabeeinrichtung insbesondere einzeln an die Ladefläche des beweglichen Transportmittels abgegeben. Zur mit einer Steuerung gesteuerten automatischen benachbarten Ablage einer Reihe von Transportgütern auf der Ladefläche des beweglichen Transportmittels wird der Beschleunigungsförderer gegenüber einer in Längsrichtung definierten Grundposition seitlich verschwenkt und das Abgabeende der Abgabeeinrichtung wird in der Längsrichtung entsprechend bewegt, um einen automatischen Längenausgleich für einen durch die Schwenkbewegung des Beschleunigungsförderers bewirkten Längenversatz auszugleichen und insbesondere eine dichte Beladung der Ladefläche zu ermöglichen. Der Beschleunigungsförderer beschleunigt ein Transportgut mit einem Antrieb durch die Steuerung gesteuert stärker, wenn es in einer seitlichen Position positioniert werden soll, die wenigstens teilweise außerhalb des seitlichen Schwenkbereiches der Abgabeeinrichtung liegt.

Das erfindungsgemäße Verfahren hat viele Vorteile. Das erfindungsgemäße Verfahren erlaubt ein automatisches Beladen von Ladeflächen von beispielsweise Lkw mit Transportgütern wie flexiblen Säcken. Dabei ist ein vollautomatischer Betrieb möglich, bei dem ein manueller Eingriff nicht nötig ist. Dadurch kann die körperliche Belastung einer Bedienperson ganz erheblich reduziert werden, da die Bedienperson nur noch beaufsichtigend tätig sein muss. Die Bedienperson muss nicht jeden einzelnen Sack positionieren oder sogar anheben.

Mit der Erfindung ist es möglich, an den Abgabepunkt entsprechend der gewünschten Ablageposition ausgerichtete Säcke zur Verfügung zu stellen.

Die Erfindung ist flexibel einsetzbar. Der technische Aufwand ist relativ gering und die Erfindung kann an bestehenden Anlagen nachgerüstet werden. Es ist auch möglich, von oben geschlossene Laderäume zu beladen.

Diese Vorteile werden dadurch erreicht, dass nicht nur einfach eine Automatisierung der Stellung der Beladeeinrichtung insgesamt vorgenommen wird, sondern indem ein sich ergebender Längsversatz der Abgabestelle an dem Abgabeende der Abgabeeinrichtung durch eine Bewegung in oder wenigstens teilweise in Längsrichtung ausgeglichen wird. Dabei werden insbesondere der Beschleunigungsförderer und/oder die Zuführeinrichtung wenigstens zum Teil in Längsrichtung bewegt, sodass ein durch eine Verschwenkung des Beschleunigungsförderers verursachter Längsversatz der Abgabestelle bzw. des Abgabeendes jederzeit ausgeglichen werden kann und insbesondere wird. Der Längsversatz entsteht durch das bogenförmige Verschwenken in seitlicher und gegebenenfalls vertikaler Richtung, wobei dann das Abgabeende vorzugsweise einer Kugeloberfläche oder dergleichen folgt. Dadurch kann eine genaue und flexibel an den Ort angepasste Ausrichtung des Beschleunigungsförderers mit der daran insbesondere anmontierten Abgabeeinrichtung vorgenommen werden. Es wird eine vollautomatische und hochgenaue Ablage der Transportgüter auf der Ladefläche des Transportmittels ermöglicht. Es ist ebenfalls nicht nötig, das bewegliche Transportmittel während des Beladevorgangs zu bewegen.

Ein manueller Eingriff der Bedienperson ist während des vollständigen Ladevorgangs nicht nötig.

Als Transportgüter werden insbesondere Säcke und besonders bevorzugt mit Schüttgütern oder Fluiden gefüllte Säcke aus einem flexiblen Sackmaterial eingesetzt. Es ist aber auch möglich, andere Stückgüter zu verladen. Gegebenenfalls ist es auch möglich, mehrere zu beispielsweise einem Lagenverbund gekoppelte kleinere Säcke bzw. Beutel oder Tüten als Stückgut zu verladen.

Besonders bevorzugt gibt die Abgabeeinrichtung die Transportgüter jeweils einzeln und aktiv und gezielt an die Ladefläche ab. Der Beschleunigungsförderer wird zur vollständigen automatischen Beladung der Ladefläche des beweglichen Transportmittels insbesondere seitlich und in der Höhe verstellt. Der Beschleunigungsförderer kann an einem Fahrwagen anmontiert sein und mit diesem in Längsrichtung verfahren werden, um einen Längenausgleich bei einer Schwenkbewegung des Beschleunigungsförderers zu bewirken. Vorzugsweise ist die Zuführeinrichtung mit einem in Längsrichtung verfahrbaren Fahrwagen gekoppelt. Die Längsrichtung ergibt sich aus der Längsrichtung des Beschleunigungsförderers in der Grundposition. In dieser Position kann die Längsrichtung des Beschleunigungsförderers mit einer Längsrichtung der Zuführeinrichtung übereinstimmen. Der Beschleunigungsförderer kann in allen Ausgestaltungen auch Beschleunigungseinrichtung genannt werden.

In einer bevorzugten Weiterbildung transportiert der Beschleunigungsförderer die Transportgüter schneller als die Zuführeinrichtung. Dadurch wird dafür gesorgt, dass eine durchgehende Verladung der Stückgüter ermöglicht wird. Wenn der Beschleunigungsförderer beispielsweise verschwenkt werden muss, können mit der Zuführeinrichtung dennoch weiterhin Transportgüter weiter gefördert werden, da der Beschleunigungsförderer im Anschluss die Transportgüter schneller abtransportiert als die Zuführeinrichtung Transportgüter antransportiert. Eine höhere Geschwindigkeit ist vorteilhaft, um eine ausreichende Abwurfgeschwindigkeit des Sacks zu gewährleisten und um eine kontinuierliche Sackzuführung zu ermöglichen.

Vorzugsweise wird der Beschleunigungsförderer um eine im Wesentlichen horizontale Achse verschwenkt, um eine Abgabehöhe der Abgabeeinrichtung zu beeinflussen und insbesondere einzustellen. Besonders bevorzugt wird der Beschleunigungsförderer um eine im Wesentlichen vertikale Achse verschwenkt, um eine seitliche Stellung der Abgabeeinrichtung zu beeinflussen und insbesondere einzustellen. Dabei wird der Beschleunigungsförderer vorzugsweise an dem Ende verschwenkt, wo die Zuführeinrichtung angeordnet ist bzw. wo die zu verladenen Transportgüter dem Beschleunigungsförderer von der Zuführeinrichtung übergeben werden.

In bevorzugten Ausgestaltungen ist es möglich, eine Abgabe- oder Abwurfbahn eins Transportgutes gezielt zu beeinflussen. Diese Beeinflussung hängt insbesondere von der erwünschten Endposition des Transportgutes in dem Laderaum bzw. auf der Ladefläche ab. Dazu kann die Fördergeschwindigkeit des Beschleunigungsförderers gezielt z. B. winkelabhängig eingestellt werden. Außerdem kann stattdessen oder zusätzlich der Winkel der Ablageeinrichtung zur Horizontalen auch individuell angepasst werden.

In bevorzugten Ausgestaltungen ist die Beschleunigung bzw. Transportgeschwindigkeit des Beschleunigungsförderers immer gleich oder so hoch, dass eine ausreichende Positioniergenauigkeit mit dem Beschleunigungsförderer erzielbar ist. Die konkrete Geschwindigkeit kann von dem Transportgut abhängen, gegebenenfalls kann die Transportgeschwindigkeit des Beschleunigungsförderers auch verringert werden, wenn ein Transportgut im Wesentlichen nur in Längsrichtung transportiert werden muss. Werden die Transportgüter hingegen in die seitlichen Ecken oder dergleichen transportiert, so kann durch eine erhöhte Geschwindigkeit des Beschleunigungsförderers der Eigenimpuls des Transportgutes ausgenutzt werden, um das Transportgut noch zuverlässiger beispielsweise in die Ecke hinein zu fördern.

Das ermöglicht es auch Säcke, deren Breite schmaler als das Abgabeende ist, in den seitlichen Ecken abzulegen. Andernfalls würde ein Spalt zwischen Sack und seitlicher Bordwand verbleiben.

Besonders bevorzugt behält das Transportgut seine parallele vorausgewählte Ausrichtung (längs oder quer) zu einer Ladekante der Ladefläche bei, auch wenn der Beschleunigungsförderer verschwenkt wird. Das bedeutet, dass die Längs- und Querkanten beispielsweise eines Sacks die gleiche Ausrichtung zu der Längsrichtung in der Grundposition des Beschleunigungsförderers beibehalten, auch wenn das Transportgut dem Beschleunigungsförderer in einer verschwenkten Position übergeben wird.

Vorzugsweise wird der Beschleunigungsförderer seitlich verschwenkt, bevor das Transportgut dem Beschleunigungsförderer übergeben wird. Insbesondere wird der Beschleunigungsförderer nur dann seitlich verschwenkt, wenn sich gerade kein Transportgut auf dem Beschleunigungsförderer befindet. Durch diese Maßnahmen wird gewährleistet, dass die Orientierung der Seitenkanten des Transportgutes zu der durch die Grundposition definierten Längsrichtung nicht beeinflusst wird, auch wenn der Beschleunigungsförderer zuvor verschwenkt wurde.

Es ist auch möglich, dass der Beschleunigungsförderer während der Ablage einer Reihe von Transportgütern kontinuierlich verschwenkt wird. Dadurch wird ein Stoppimpuls vermieden und ein Nachpendeln bei der Positionierung verhindert.

Wird beispielsweise eine Reihe von Transportgütern quer und insbesondere senkrecht zu der durch die Grundposition definierten Längsrichtung auf der Ladefläche positioniert, so ist eine bevorzugte Möglichkeit das nacheinander erfolgende Ablegen der einzelnen Transportgüter, wobei zwischen der Ablage eines Transportguts und der Aufnahme des nächsten Transportgutes eine Winkeleinstellung des Beschleunigungsförderers verändert bzw. angepasst wird.

Möglich und bevorzugt ist es aber auch, dass eine z.B. langsame, aber kontinuierliche Verschwenkung, des Beschleunigungsförderers erfolgt, während die Transportgüter mit dem Beschleunigungsförderer zu der Abgabeeinrichtung transportiert und von dieser an die Ladefläche abgegeben werden. Die Geschwindigkeit der Verschwenkung kann sich zwischen einem minimalen und maximalen Wert ändern. Durch eine solche Verschwenkung des Beschleunigungsförderers während des Transports eines Transportgutes wird gegebenenfalls die Ausrichtung des Transportgutes relativ zu der Zuführeinrichtung verändert, in dem der Beschleunigungsförderer noch während des Transportes verschwenkt wird. Wenn aber eine Mehrzahl von Transportgütern quer auf der Ladefläche nebeneinander angeordnet werden sollen, so wirkt sich ein kleiner Ausrichtungsfehler bei entsprechend gutmütigen Reibwerten des Transportgutes nicht besonders aus, insbesondere, wenn die einzelnen Transportgüter mit Schwung von dem Abgabeende der Abgabeeinrichtung abgegeben werden und sich so selbsttätig an den zuvor abgelegten Transportgütern oder an der Wand der Ladefläche oder dergleichen ausrichten.

In anderen bevorzugten Ausgestaltungen wird das Transportgut auf dem Beschleunigungsförderer ausgerichtet. Ein solches Ausrichten kann aktiv oder passiv erfolgen. Beispielsweise kann das Transportgut über eine Klammerdrehvorrichtung gedreht werden, um den gewünschten Winkel des Transportgutes zu dem Beschleunigungsförderer einzustellen. In besonders bevorzugten Ausgestaltungen wird das Transportgut auf dem Beschleunigungsförderer über eine gezielte separate Ansteuerung von wenigstens zwei benachbarten Förderriemen ausgerichtet. Dabei ist es möglich und bevorzugt, dass die benachbarten Förderriemen unterschiedlich schnell angetrieben werden, um so eine Relativgeschwindigkeit der benachbarten Förderriemen auszunutzen und eine gezielte Drehung des Transportgutes zu bewirken.

Dabei kann eine Ausrichtung nach der technischen Lehre der DE 10 2011 116 535 A1 erfolgen, wonach ein Gegenstand durch einen parallel zu einem Förderer angeordneten und die Fahreinrichtung kreuzenden Lichtvorhang bewegt wird und eine projizierte Längsabmessung des Gegenstands erfasst wird und der Gegenstand - also hier das Transportgut - bedarfsweise gedreht wird, bis die projizierte Längsabmessung einen vorbestimmten Wert besitzt. Durch eine gezielte Steuerung einzelner Förderriemen oder Transportbänder kann eine beliebige Drehung des Transportgutes erzielt werden. Möglich ist eine Winkelausrichtung auch über beliebige andere und z.B. bildgebende Verfahren, die auch eine kontinuierliche Messung und Steuerung der Position und/oder der Ausrichtung und/oder der Lage des Transportgutes ermöglichen.

In bevorzugten Ausgestaltungen wird der Beschleunigungsförderer teleskopiert, um den Längenversatz auszugleichen. Beispielsweise kann der Beschleunigungsförderer ein teleskopierbares Förderband oder dergleichen umfassen, welches ausgefahren werden kann, um den Längenversatz auszugleichen. Dabei wird automatisch berücksichtigt, unter welchem Winkel der Beschleunigungsförderer relativ zu der Grundposition gerade ausgerichtet ist, um unter Berücksichtigung des aktuellen Winkels den Längenversatz insgesamt zu ermitteln und einen geeigneten Wert zu bestimmen, mit dem der Beschleunigungsförderer aus- oder eingefahren werden muss, um den entsprechenden Längsversatz exakt auszugleichen.

Vorzugsweise ist es auch möglich, dass die Abgabeeinrichtung teleskopierbar ausgeführt ist und/oder an dem Beschleunigungsförderer ausgefahren und wieder eingefahren werden kann. Beispielsweise ist es möglich, die Abgabeeinrichtung in einer Aussparung des Beschleunigungsförderers anzuordnen. Die Abgabeeinrichtung kann beispielsweise auch unterhalb des Beschleunigungsförderers angeordnet und somit ausgefahren werden, um eine Länge des Beschleunigungsförderers inklusive der Abgabeeinrichtung zu verändern. Auch darüber ist ein Ausgleich des Längenversatzes möglich.

In bevorzugten Weiterbildungen werden mehrere Reihen von Transportgütern in Längsrichtung zu einer Lage aneinandergereiht und es werden vorzugsweise mehrere Reihen treppenartig gestapelt. Dabei können zunächst zwei Reihen von Transportgütern direkt nebeneinander angeordnet werden. Anschließend wird vorzugsweise eine dritte Reihe treppenartig auf den ersten beiden angeordnet. Dadurch werden eine hohe Stabilität und eine vernünftige Arbeitsgeschwindigkeit erreicht.

In bevorzugten Ausgestaltungen wird die Abgabeeinrichtung beim Ablegen eines Transportgutes unmittelbar vor dem Aufnahmeplatz des abzulegenden Transportgutes positioniert, um ein Zurückfedern des abgelegten Transportgutes und somit ein Verschieben des Transportgutes zu verhindern. Wird die Abgabeeinrichtung mit nur einem geringen Abstand vor dem gewünschten Aufnahmeplatz angeordnet, so muss sich das Transportgut auf dem definierten Aufnahmeplatz ablegen, wodurch die Positioniergenauigkeit gesteigert werden kann.

Die erfindungsgemäße Beladeeinrichtung dient zum Beladen von Ladeflächen von auf einer Transportfläche beweglichen Transportmitteln mit Transportgütern wie Säcken oder anderen Stückgütern. Dabei umfasst die Beladeeinrichtung eine Zuführeinrichtung, um die Transportgüter nacheinander anzutransportieren. Die Beladeeinrichtung umfasst weiterhin einen nachgeschalteten Beschleunigungsförderer, dem die Transportgüter zum Weitertransport übergeben werden. Außerdem ist eine Abgabeeinrichtung mit einem Abgabeende vorgesehen, an dem die Transportgüter insbesondere einzeln an die Transportfläche des beweglichen Transportmittels abgegeben werden. Zur mit einer Steuerung gesteuerten automatischen benachbarten Ablage einer Reihe von Transportgütern auf der Ladefläche des beweglichen Transportmittels ist der Beschleunigungsförderer gegenüber einer eine Längsrichtung definierenden Grundposition seitlich automatisch verschwenkbar und das Abgabeende der Abgabeeinrichtung ist in der Längsrichtung entsprechend automatisch bewegbar, um einen automatischen Längenausgleich für einen durch die Schwenkbewegung des Beschleunigungsförderers bewirkten Längenversatz im Wesentlichen auszugleichen und eine dichte Beladung der Transportfläche zu ermöglichen. Der Beschleunigungsförderer ist dazu eingerichtet und ausgebildet, ein Transportgut mit einem Antrieb durch die Steuerung gesteuert stärker zu beschleunigen, wenn es in einer seitlichen Position positioniert werden soll, die wenigstens teilweise außerhalb des seitlichen Schwenkbereiches der Abgabeeinrichtung liegt.

Die erfindungsgemäße Beladeeinrichtung hat ebenfalls viele Vorteile, da sie eine automatische Beladung der Ladeflächen von beispielsweise Lkw mit Säcken ermöglicht. Durch den automatischen Ausgleich eines Längenversatzes kann eine dichte Beladung der Transportfläche erfolgen, die zudem noch vollautomatisch durchgeführt werden kann.

Auch das Bilden von Verbünden aus Kombinationen von Längs- und Quersäcken ist möglich.

Vorzugsweise ist zwischen der Zuführeinrichtung und dem Beschleunigungsförderer eine Übergabeeinrichtung vorgesehen, mit welcher der Beschleunigungsförderer von der Zuführeinrichtung entkoppelt wird. Die Übergabeeinrichtung kann als Ausgleichseinrichtung ausgebildet sein, mit welcher eine Ausrichtung eines zu übergebenen Transportgutes auf dem Beschleunigungsförderer erhalten bleibt, sodass eine parallele Ausrichtung eines zuvor auf der Zuführeinrichtung angeordneten Transportgutes zu einem Transportgut auf dem Beschleunigungsförderer gewährleistet werden kann.

In einer bevorzugten Weiterbildung umfasst die Übergabeeinrichtung eine Rollenbahn mit mehreren Rollen, wobei wenigstens eine Mehrzahl der Rollen der Rollenbahn der Übergabeeinrichtung nicht angetrieben ist. Insbesondere sind die Rollen parallel zueinander angeordnet und vorzugsweise sind alle Rollen nicht angetrieben. Dadurch wird gewährleistet, dass sich die Ausrichtung des Transportgutes bei der Übergabe an den Beschleunigungsförderer nicht ändert. Vorzugsweise sind alle welcher der Beschleunigungsförderer von der Zuführeinrichtung entkoppelt wird. Die Übergabeeinrichtung kann als Ausgleichseinrichtung ausgebildet sein, mit welcher eine Ausrichtung eines zu übergebenen Transportgutes auf dem Beschleunigungsförderer erhalten bleibt, sodass eine parallele Ausrichtung eines zuvor auf der Zuführeinrichtung angeordneten Transportgutes zu einem Transportgut auf dem Beschleunigungsförderer gewährleistet werden kann.

In einer bevorzugten Weiterbildung umfasst die Übergabeeinrichtung eine Rollenbahn mit mehreren Rollen, wobei wenigstens eine Mehrzahl der Rollen der Rollenbahn der Übergabeeinrichtung nicht angetrieben ist. Insbesondere sind die Rollen parallel zueinander angeordnet und vorzugsweise sind alle Rollen nicht angetrieben. Dadurch wird gewährleistet, dass sich die Ausrichtung des Transportgutes bei der Übergabe an den Beschleunigungsförderer nicht ändert. Vorzugsweise sind alle Rollen etwa gleich breit oder genau gleich breit.

In allen Ausgestaltungen ist der Beschleunigungsförderer vorzugsweise höhenverstellbar und die Abgabeeinrichtung wird vorzugsweise über eine Art von Parallelogrammführung geführt, sodass die Abgabeeinrichtung bei einer Höhenverstellung des Beschleunigungsförderers ihre Ausrichtung zur Horizontalen im Wesentlichen beibehält. Es ist möglich, dass die Parallelogrammführung keine echte Parallelogrammführung ist, sondern, dass geringe oder gewisse Unterschiede zwischen den Längen gegenüberliegender Seiten vorgesehen sind. Dann wird der Parallelogrammeffekt etwas abgeschwächt und die Ausrichtung der Abgabeeinrichtung relativ zur Horizontalen ändert sich mit der Einstellung des Beschleunigungsförderers. Das kann gegebenenfalls sogar gewünscht werden, um beispielsweise die Ausrichtung der Abgabeeinrichtung in einem oberen Bereich bzw. in einem unteren Bereich anzupassen.

Eine Parallelogrammführung zur Ablageeinrichtung umfasst vorzugsweise eine Koppeleinheit die über vier Kopplungsgelenke gelenkig miteinander verbunden sind. Vorzugsweise ist wenigstens eine Länge wenigstens einer Koppeleinheit einstellbar und/oder automatisch längenveränderbar.

Besonders bevorzugt wird die Abgabeeinrichtung zusammen mit dem Beschleunigungsförderer in seitlicher Richtung verschwenkt. Dabei sind die Abgabeeinrichtung und der Beschleunigungsförderer vorzugsweise linear zueinander ausgerichtet.

In einer vorteilhaften Weiterbildung ist das Ende des Beschleunigungsförderers, an welchem die Abgabeeinrichtung angeordnet ist, in der Höhe gegenüber der Übergabeeinrichtung verschwenkbar.

In bevorzugten Weiterbildungen ist dem Beschleunigungsförderer wenigstens eine Dreheinrichtung zugeordnet. Dabei ist es möglich, dass dem Beschleunigungsförderer eine Dreheinrichtung vorgeschaltet ist. Die Dreheinrichtung kann beispielsweise an der Zuführeinrichtung angeordnet sein. Möglich ist es aber auch, dass an dem Beschleunigungsförderer wenigstens eine Dreheinrichtung angeordnet ist, um Transportgüter beispielsweise gezielt um 90° oder aber um beliebige Winkel zu drehen. Für Säcke als Transportgüter kann eine Sackdreheinrichtung vorgesehen sein. Es ist möglich und bevorzugt, eine Dreheinrichtung aus dem Stand der Technik einzusetzen.

Vorzugsweise umfasst die Zuführeinrichtung und/oder der Beschleunigungsförderer wenigstens ein Transportband oder wenigstens einen Transportriemen oder dergleichen. Die Zuführeinrichtung kann eine Rutsche umfassen oder als eine solche ausgebildet sein.

Es ist vorteilhaft, wenn die Abgabeeinrichtung eine Rollenbahn aufweist. Dabei kann die Rollenbahn insbesondere eine in der Draufsicht etwa trapezförmige oder sich nach vorn zum Abgabeende hin verjüngende Ausgestaltung aufweisen. Vorzugsweise ändert sich eine Länge der Rollen der Rollenbahn der Abgabeeinrichtung zum vorderen Ende hin. Die Änderung beträgt vorzugsweise wenigstens 20 % und insbesondere wenigstens mehr als 30 %. Dadurch kann eine bessere Ausrichtung der Beladeeinrichtung relativ zu einer Ladefläche eines beispielsweise Lkw erzielt werden, da die Beladeeinrichtung noch weiter zur Seitenwand von zum Beispiel einem Lkw schwenken kann.

In bevorzugten Ausgestaltungen umfasst die Rollenbahn der Abgabeeinrichtung wenigstens ein Transportband und/oder wenigstens eine angetriebene Rolle. Möglich und bevorzugt ist es auch, dass wenigstens eine Rolle der Rollenbahn der Abgabeeinrichtung angetrieben ist und dass die anderen Rollen über ein Transportband mit angetrieben werden.

In vorteilhaften Weiterbildungen umfasst die Beladeeinrichtung einen Transportgutzubringer zum Antransport der Transportgüter und zur Übergabe der Transportgüter an die Zuführeinrichtung. Werden Säcke als Transportgüter verwendet, kann ein solcher Transportgutzubringer auch als Sackzubringer bezeichnet werden.

In allen Ausgestaltungen ist bevorzugt, dass ein maximaler Neigungswinkel des Beschleunigungsförderers maximal 45° oder 20° zur Horizontalen beträgt. Der maximale Neigungswinkel kann auch kleiner sein und beispielsweise +/-15° betragen. Insbesondere bei steilen Winkeln können rutschhemmende Maßnahmen vorgesehen sein.

Weitere Vorteile der vorliegenden Erfindung ergeben sich aus dem Ausführungsbeispiel, welches mit Bezug auf die beiliegenden Figuren im Folgenden erläutert wird:
In den Figuren zeigen:
- Fig. 1: eine perspektivische Ansicht einer Verpackungsanlage mit einer erfindungsgemäßen Beladeeinrichtung;
- Fig. 2: eine vergrößerte perspektivische Ansicht der Beladeeinrichtung nach Fig. 1;
- Fig. 3: eine Seitenansicht eines vorderen Teils der Beladeeinrichtung nach Fig. 1;
- Fig. 4: eine Draufsicht auf den vorderen Teil der Beladeeinrichtung nach Fig. 3;
- Fig. 5: eine perspektivische Teilansicht einer Ausführungsvariante der Beladeeinrichtung nach Fig. 1;
- Fig. 6: eine schematische perspektivische Teilansicht der Beladeeinrichtung nach Fig. 1, und
- Fig. 7: eine vergrößerte Seitenansicht der Abgabeeinrichtung.

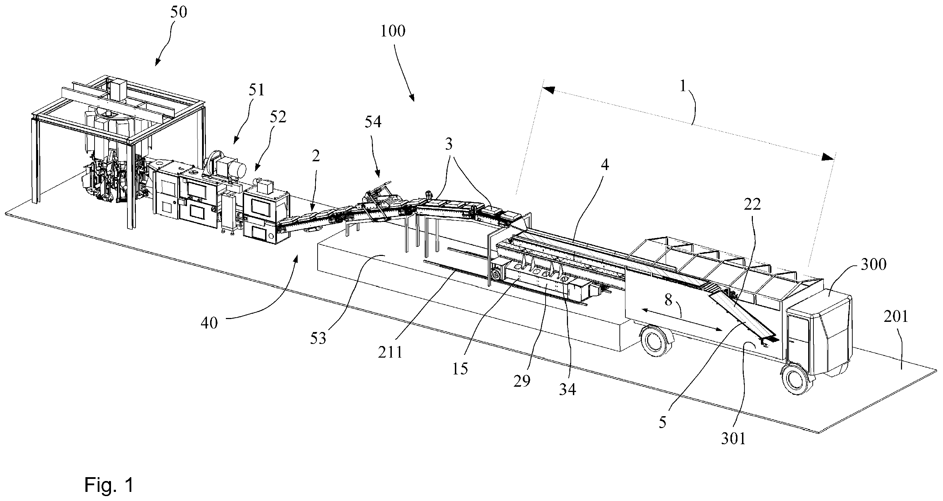

Figur 1 zeigt eine perspektivische Ansicht einer Verpackungsanlage 100 zur Abfüllung und zum Verladen von zum Beispiel Zement in flexible Säcke. Die Verpackungsanlage 100 kann aber in der dargestellten Form für unterschiedlichste Arten von Stückgütern und von in Behälter oder Säcke abgefüllten Schüttgütern oder Fluiden eingesetzt werden.

Die Verpackungsanlage 100 umfasst eine Packmaschine 50, die hier 8, 10, 12 oder 16 Füllstutzen auf ihrem Umfang verteilt angeordnet aufweist und die im Betrieb rotiert und während der Rotation das abzufüllende Schüttgut in die als Transportgut 2 dienenden Säcke 3 abfüllt. Der Packmaschine 50 werden an zum Beispiel einer Winkelposition mit einer hier nicht sichtbaren Sackaufsteckvorrichtung Säcke zugeführt und an die Füllstutzen angesteckt.

Nach der Füllung der Säcke 3 als Transportgüter 2 wird der gefüllte Sack abgeworfen und zu der Reinigungsstation 51 verbracht. Daran schließt sich eine Kontrollwaage 52 an, die beispielsweise auf einem Förderband angeordnet sein kann, um die Transportgüter 2 gegebenenfalls während des Transportes wiegen zu können.

Über einen Transportgutzubringer 40 bzw. Sackzubringer werden die Säcke 3 der eigentlichen Beladeeinrichtung 1 zugeführt, die als Beladevorrichtung auch den Transportgutzubringer 40 umfassen kann.

An den Transportgutzubringer 40 ist hier ein Pressband 54 angeordnet, mit dem die zu transportierenden Säcke 3 auf dem Sackzubringer nochmals in Form gepresst werden, um eine bessere Stapelfähigkeit zu erzielen.

Über eine konventionelle Sackrutsche 55 werden die Transportgüter 2 der Zuführeinrichtung 4 der Beladeeinrichtung 1 übergeben.

Die Zuführeinrichtung 4 ist hier fest mit einem Fahrwagen 15 der Beladeeinrichtung 1 verbunden. Der Fahrwagen 15 ist hier auf Schienen 211 entlang der Schienen 211 verfahrbar angeordnet.

An dem vorderen Ende der Zuführeinrichtung 4 ist ein Beschleunigungsförderer 5 hier seitlich und in der Höhe verschwenkbar befestigt. In Figur 1 ist der Beschleunigungsförderer 5 in der Grundposition 22 dargestellt, in der der Beschleunigungsförderer 5 hier im Ausführungsbeispiel eine lineare Fortsetzung der Zuführeinrichtung 4 bildet.

Eine Längsausrichtung des Beschleunigungsförderers 5 in der Grundposition 22 definiert eine Längsrichtung 8. Hier ist die Längsrichtung 8 parallel zu der Ausrichtung der Zuführeinrichtung 4 und der Schienen 211, auf denen der Fahrwagen 15 verfahrbar vorgesehen ist. Hier ist die Längsrichtung 8 auch parallel zu einer Längserstreckung der Ladefläche 301 des Lkw 300.

Der Fahrwagen 15 weist wenigstens eine Ballastaufnahme 29 mit vorzugsweise wenigstens einer Zugangsöffnung 34 auf, um die Ballastaufnahme 29 mit einem Gewicht wie beispielsweise Beton oder dergleichen zu beschweren. Dadurch wird eine ausreichende Masse zur Verfügung gestellt, sodass Schwingungen an der Beladeeinrichtung 1 gedämpft und ein Umkippen der Beladeeinrichtung 1 zuverlässig verhindert werden.

Bei entsprechend geeigneten Ladeflächen 301 kann auch am Kopf der Zuführeinrichtung 4 eine Stützeinrichtung vorgesehen sein, um die erforderliche Masse des Gegengewichtes der Ballastaufnahme 29 zu reduzieren und vertikale Schwingungen zu vermeiden. Die Stützeinrichtung kann ein Stützrad umfassen und gegebenenfalls heb- und senkbar ausgeführt sein.

Mit der Beladeeinrichtung 1 ist ein automatisches Beladen der Ladefläche 301 mit Transportgütern 2 und hier Säcken 3 möglich. Ein manuelles Verladen einzelner Säcke 3 von Hand durch eine Bedienperson oder auch nur ein Ausrichten der einzelnen Säcke auf der Ladefläche 301 ist von Hand nicht nötig.

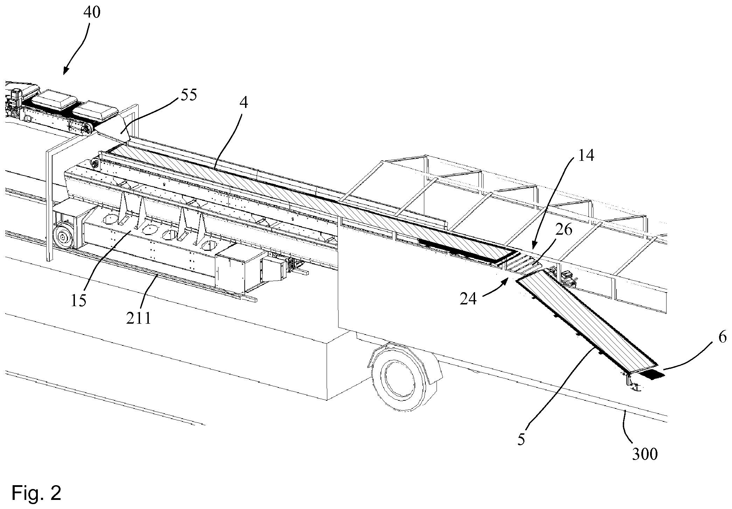

Figur 2 zeigt eine vergrößerte perspektivische Ansicht der Beladeeinrichtung 1 nach Figur 1. Von dem Sackzubringer 40 werden die einzelnen Säcke 3 über die mit einem Gleitblech versehene Sackrutsche 55 auf die Zuführeinrichtung 4 der Beladeeinrichtung 1 übergeben.

Die Zuführeinrichtung 4 umfasst hier wenigstens ein Transportband, mit dem die Transportgüter 2 nach vorn zu der Übergabeeinrichtung 14 transportiert werden können. Die Übergabeeinrichtung 14 besteht hier im Wesentlichen aus einer Rollenbahn 24 mit mehreren einzelnen drehbar gelagerten Rollen 26. Hier sind alle Rollen 26 der Rollenbahn 24 nicht angetrieben.

Dadurch wird es ermöglicht, dass die Transportgüter 2 bei der Übergabe von der Zuführeinrichtung 4 an den Beschleunigungsförderer 5 ihre Ausrichtung behalten und nicht etwa in Längsrichtung des Beschleunigungsförderers gedreht werden. Im Unterschied dazu werden bei konventionellen Sackrutschen, wie sie die Sackrutsche 55 darstellt, Säcke so auf Förderbändern abgesetzt, dass sich die Säcke entlang des Förderbandes ausrichten. Die Übergabeeinrichtung 14 verhindert dies, sodass eine Ausrichtung einer beispielsweise Längskante eines Sacks 3 auf der Zuführeinrichtung 4 parallel zu der Ausrichtung des entsprechenden Sacks 3 nach der Übergabe an den Beschleunigungsförderer 5 ist. Das gilt auch, wenn der Beschleunigungsförderer 5, sowie in Figur 2 dargestellt, in eine seitliche Richtung verschwenkt wurde.

Am Ende des Beschleunigungsförderers 5 schließt sich eine Sackabgabeeinrichtung 6 an, an deren Abgabeende 7 die Säcke 3 auf die Ladefläche 301 des Transportmittels 300 abgegeben werden.

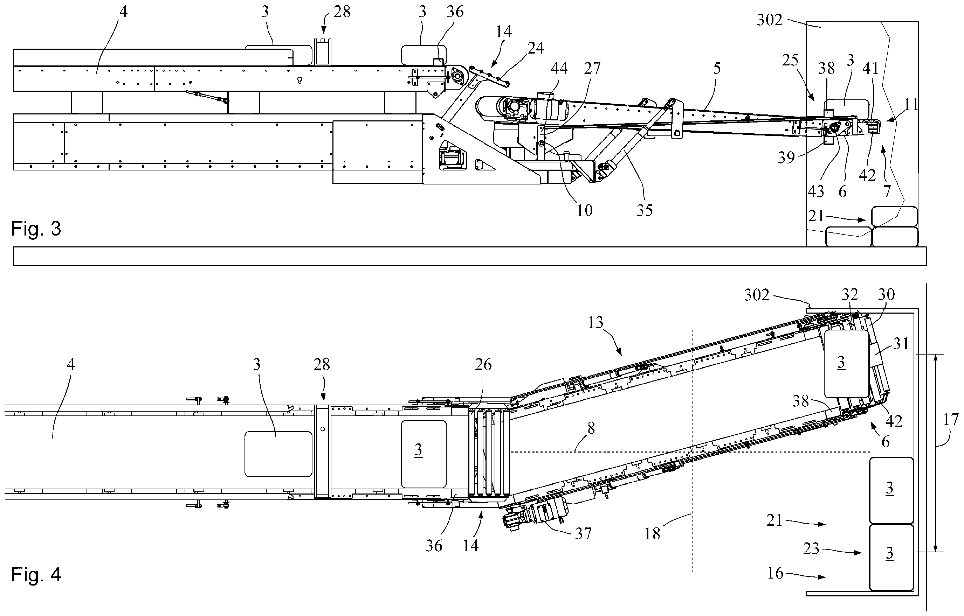

Figur 3 zeigt eine vergrößerte schematische Seitenansicht des vorderen Teils der Beladeeinrichtung 1 mit einem Teil der Zuführeinrichtung 4 und dem Beschleunigungsförderer 5 sowie der Abgabeeinrichtung 6.

Die Säcke 3 werden auf dem Transportband der Zuführeinrichtung 4 antransportiert und können an der Dreheinrichtung 28 bzw. Sackdrehstation wunschgemäß gedreht werden, wenn die Säcke beispielsweise in Längs- oder in Querrichtung auf der Ladefläche des Lkws abgelegt werden sollen. Über eine entsprechende Ansteuerung der Dreheinrichtung 28 ist es auch möglich, gezielte Lagenbilder mit ineinander verzahnten Lagen von Säcken 3 auf der Ladefläche 301 zu bilden.

Am Ende der Zuführeinrichtung 4 werden die Säcke 3 an die Übergabeeinrichtung 14 mit der Rollenbahn 24 übergeben. In Figur 3 ist erkennbar, dass die Übergabeeinrichtung 14 separat von der Zuführeinrichtung 4 und dem Beschleunigungsförderer 5 angeordnet ist.

Von der Übergabeeinrichtung 14 werden die Transportgüter 2 bzw. Säcke 3 an den Beschleunigungsförderer 5 übergeben, der hier ein oder mehrere Transportbänder umfasst, um die Säcke 3 von dem Ende an der Übergabeeinrichtung 14 zu dem Ende 25 weiter zu transportieren, wo die Säcke 3 an die Abgabeeinrichtung 6 übergeben werden.

Der Beschleunigungsförderer 5 weist vorzugsweise eine variable und insbesondere größere Transportgeschwindigkeit als die Zuführeinrichtung 4 auf. Der Beschleunigungsförderer 5 ist um die horizontale Drehachse 10 verschwenkbar, sodass das Ende 25 höhenverstellbar ist. Die Schwenkachse 10 ist hier Teil einer Parallelogrammführung 27, die dafür sorgt, dass die Abgabeeinrichtung 6 ihre Ausrichtung relativ zur Horizontalen auch bei einer Höhenverstellung des Beschleunigungsförderers 5 im Wesentlichen beibehält.

Der Beschleunigungsförderer 5 ist über die mit hydraulischen Zylindern versehene Höhenverstellung 35 höhenverstellbar.

Im Bereich der Ablageeinrichtung 6 ist die Seitenwand 302 des Transportmittels schematisch eingezeichnet.

Eine Abgabehöhe 11 der Abgabeeinrichtung 6 bzw. des Abgabeendes 7 kann durch wenigstens einen Höhensensor 39 erfasst werden, der die relative Höhe zu der Ladefläche 301 oder einer sich unterhalb des Höhensensors 39 befindenden Sackklage und/oder zu einer die Ladefläche nach oben begrenzenden Wandung erfasst.

Sensoren 36 bzw. 38 sind auch an dem Ende der Zuführeinrichtung 4 und dem Ende des Beschleunigungsförderers 5 angeordnet. Erreicht ein Sack den Sensor 36, so wird die Zuführeinrichtung 4 insgesamt vorzugsweise gestoppt, bis der wartende Sack 3 über die Übergabeeinrichtung 14 an den Beschleunigungsförderer 5 übergeben werden kann. In entsprechender Weise wird der Sensor 38 genutzt, um das Vorhandensein eines Sacks 3 am Ende der Beschleunigungseinrichtung 5 bzw. der Ablageeinrichtung 6 zu erfassen und um die Ablageeinrichtung 6 und den Beschleunigungsförderer 5 gezielt entsprechend zu steuern.

Während einer Höhenverstellung des Beschleunigungsförderers 5 verschwenkt die Ablegeeinrichtung 6 um den Drehpunkt 43, sodass durch die Parallelogrammführung 27 die etwa horizontale Ausrichtung der Ablageeinrichtung 6 wenigstens im Wesentlichen erhalten bleibt.

Weiterhin ist vorzugsweise wenigstens ein Seitensensor 41 an wenigstens einer Seite des Beschleunigungsförderers 5 und/oder an wenigstens einer Seite der Abgabeeinrichtung angeordnet, um seitliche Abstände zu einer Wandung erfassen zu können. Entsprechend kann auch ein Abstandssensor 42 am Abgabeende 7 der Abgabeeinrichtung 6 oder an dem Beschleunigungsförderer 5 angeordnet sein, um einen Abstand in Längenabstand zu einem Ende der Ablagefläche 301 zu erfassen.

Auf dem Boden der Ladefläche 301 sind hier mehrere Reihen 21 von Säcken 3 schematisch eingezeichnet, die dort Reihe für Reihe nacheinander abgelegt werden. Dabei erfolgt ein treppenartiges Anordnen der Reihen, was den Halt und die Stabilität beim Verladen steigert.

Figur 4 zeigt eine Draufsicht auf den Ausschnitt nach Figur 3. Deutlich zu erkennen ist, dass sich der Beschleunigungsförderer 5 nicht in der Grundposition 22 befindet, in der der Beschleunigungsförderer 5 parallel zu der hier eingezeichneten Längsrichtung 8 ausgerichtet ist.

Auf der Zuführeinrichtung 4 ist ein Sack 3 eingezeichnet, der sich hier vor der Dreheinrichtung 28 befindet, wo der Sack um 90° gedreht werden kann, sodass sich eine Ausrichtung des Sacks 3 ergibt, wie sie am Ende der Zuführeinrichtung 4 dargestellt ist, kurz bevor der Sack 3 den Sensor 36 erreicht. An die Zuführeinrichtung 4 schließt sich die Übergabeeinrichtung 14 mit den Rollen 26 der Rollenbahn 24 an. Die Rollenbahn 24 sorgt dafür, dass die Säcke dabei ihre Ausrichtung relativ zu der Zuführeinrichtung 4 beibehalten, wie der Sack 3 an der Abgabeeinrichtung 6 zeigt, dessen Längskanten parallel zu dem Sack in der Nähe des Sensors 36 ausgerichtet sind.

Zum Antrieb des Transportbandes des Beschleunigungsförderers 5 wird ein Motor 37 eingesetzt.

In Figur 4 ist eine seitliche Stellung 13 des Beschleunigungsförderers 5 eingezeichnet. Durch eine seitliche Verschwenkung des Beschleunigungsförderers 5 können Säcke 3 in Querrichtung 18 nebeneinander genau positioniert abgelegt werden, so wie dies beispielhaft an zwei Säcken 3 auf der Ladefläche 301 eingezeichnet ist. Die seitliche Position 16 zeigt einen Sack 3 in einer Ecke der Ladefläche 301, wo der Sack 3 direkt an der Seitenwand 302 des Lkw anliegt.

Durch ein schrittweises Weiterverschwenken des Beschleunigungsförderers 5 wird eine Reihe von Säcken 3 in Querrichtung 18 an entsprechenden Aufnahmeplätzen 23 abgelegt. Dabei ist der Beschleunigungsförderer 5 über einen seitlichen Schwenkbereich 17 und in der Höhe verschwenkbar.

Die Abgabeeinrichtung 6 verfügt über eine Rollenbahn 30 mit mehreren Rollen 32, die hier über ein Transportband 31 insgesamt drehbar angetrieben werden. Auch hier sorgt die Rollenbahn für eine Abgabe des Sacks 3 mit unveränderter Ausrichtung der längs- und Querkanten.

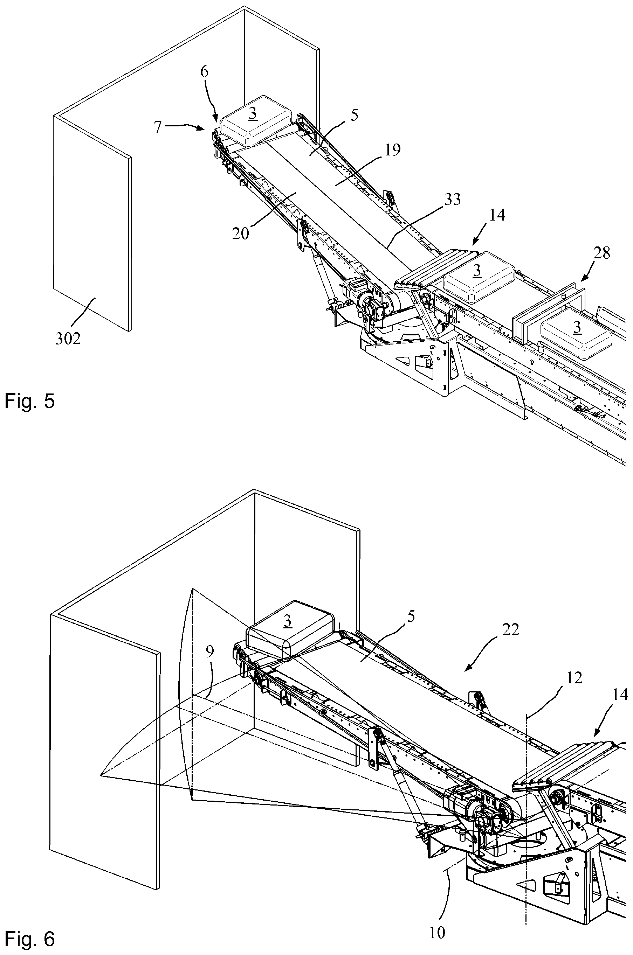

Figur 6 zeigt eine vergrößerte Darstellung der Beladeeinrichtung 1, wobei das Wirkprinzip erkennbar ist.

Der Beschleunigungsförderer 5 ist hier in einer verschwenkten seitlichen Position 13 dargestellt. Die Verschwenkung findet um die eingezeichnete vertikale Schwenkachse 12 statt. Bei einer Verschwenkung des Beschleunigungsförderers 5 um die vertikale Schwenkachse 12 verschiebt sich der vorderste Punkt des Beschleunigungsförderers 5 bzw. das Ablageende 7 der Ablageeinrichtung 6 in der Längsrichtung 8 um den Längenversatz 9.

In Figur 6 sind die möglichen Schwenkbewegungen und die daraus resultierenden Längenunterschiede in der Längsrichtung 8 schematisch dargestellt. Zwar ändert sich die Gesamtlänge des Beschleunigungsförderers 5 mit der Ablageeinrichtung 6 nicht, aber durch den Schwenkwinkel reduziert sich die projizierte Gesamtlänge um maximal dem hier eingezeichneten Längsversatz 9.

Bei der dargestellten Gebindegröße der Säcke 3 beträgt der Längsversatz 9 bis zu 50 % der Breite eines Sacks und kann bei kleineren Gebinden oder größeren Schwenkwinkeln auch 100 % und mehr betragen. Deshalb würde bei einer reinen Schwenkbewegung des Beschleunigungsförderers 5 und der Ablageeinrichtung 6 ohne Längenausgleich der vorgesehene Aufnahmeplatz 23 zur Ablage eines Sacks 3 nur ungenügend angefahren, sodass sich eine ungenaue Ablage der Säcke 3 und somit eine schlechte Stapelung der Säcke 3 ergeben würde.

Bei der erfindungsgemäßen Beladeeinrichtung 1 wird je nach angefahrener Winkelposition in seitlicher Richtung und auch in der Höhe die jeweils aktuelle Gesamtlänge berechnet und daraus der Längsversatz 9 abgeleitet, der unter diesen Seitenwinkel und unter diesem Höhenwinkel auftritt.

In entsprechender Weise wird die Länge des Beschleunigungsförderers 5 jeweils aktuell angepasst oder es wird jedenfalls das Ablageende 7 der Ablageeinrichtung 6 in Längsrichtung 8 so weit verfahren, dass eine passgenaue Übergabe und Ablage eines Sacks 3 erfolgt.

In bevorzugten Ausgestaltungen ist es dazu möglich, die Zuführeinrichtung 4 insgesamt über den Fahrwagen 15 in Längsrichtung 8 zu verfahren.

Möglich ist es aber auch, den Beschleunigungsförderer 5 teleskopierbar auszugestalten und einen Längenausgleich durch ein Ausfahren oder ein Einfahren des Beschleunigungsförderers 5 zu erzielen. Ebenso kann beispielsweise auch die Ausgabeeinrichtung 6 insgesamt an dem Beschleunigungsförderer 5 ausfahrbar oder längenverstellbar vorgesehen sein.

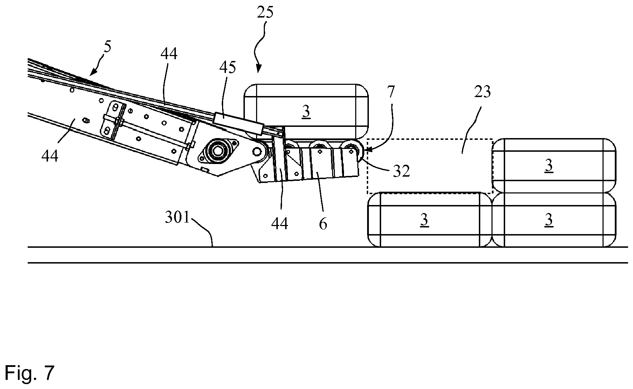

Figur 7 zeigt eine vergrößerte Seitenansicht der Abgabeeinrichtung und des vorderen Endes 25 des Beschleunigungsförderers 5 an einem Transportmittel 300, dessen Ladefläche 301 mit drei Säcken 3 bzw. Reihen 21 von Transportgütern 2 eingezeichnet ist.

Der Beschleunigungsförderer 5 ist hier leicht nach unten geneigt und hat zuvor einen Sack 3 an die Abgabeeinrichtung übergeben, von wo der Sack 3 mit (einstellbarem) Schwung an den gestrichelt eingezeichneten Aufnahmeplatz 23 abgegeben wird. Wie dargestellt, weist der Aufnahmeplatz 23 bzw. Aufnahmeraum zur Aufnahme eines Sacks 3 Abmessungen auf, die an den abzulegenden Sack 3 angepasst sind und sich hier um weniger als 20% und insbesondere weniger als 10% von den Sackabmessungen unterscheiden.

Die Abgabeeinrichtung 6 ist direkt vor dem Aufnahmeplatz 23 positioniert und das vordere Ende als Abgabeende 7 der Abgabeeinrichtung 6 verhindert ein Zurückfedern des abgelegten Sacks 3. Die Abgabefläche der Abgabeeinrichtung 6 ist bevorzugt in der Höhe der Oberkante des Aufnahmeplatzes 23 angeordnet und nicht etwa in der Höhe der Oberkante eines bereits zuvor abgelegten Sackes. Dadurch begrenzt hier die Rolle 32 nach vorn hin den Aufnahmeplatz 23, sodass eine passgenaue Platzierung erfolgt.

Wenn wie hier dargestellt, der Sack 3 in einem zentralen Bereich der Ladefläche 301 abgelegt werden soll, reicht eine mittlere oder kleine Abwurfgeschwindigkeit aus. In den Ecken wird regelmäßig eine höhere Abgabe- oder Abwurfgeschwindigkeit vorteilhafter sein, um zu gewährleisten, dass der Sack 3 sicher an dem vorgesehenen Aufnahmeplatz 23 positioniert wird.

Neben der Abgabegeschwindigkeit der Abgabeeinrichtung 6 kann optional in allen Ausführungsvarianten noch der Ausrichtungswinkel der Ablageeinrichtung 6 zur Horizontalen angepasst oder eingestellt werden.

Die Ablageeinrichtung 6 wird vorzugsweise über eine Parallelogrammführung 27 an dem vorderen Ende 25 des Beschleunigungsförderers 5 gehalten, sodass die Ablageeinrichtung 6 grundsätzlich ihre Ausrichtung zur Horizontalen beibehält, auch wenn der Beschleunigungsförderer 5 hoch geschwenkt wird. Vorzugsweise ist die Ablageeinrichtung 6 grundsätzlich etwa horizontal ausgerichtet. Durch die Einstelleinheit 45 kann eine Länge einer der vier Koppeleinheiten 44 der Parallelogrammführung 27 gezielt und automatisch verändert werden.

Damit kann die Abgabegeschwindigkeit der Ablageeinrichtung 6 und der Abwurfwinkel der Ablageeinrichtung 6 individuell für jeden Sack 3 eingestellt und angepasst werden, sodass die "Flugbahn" individuell für jeden Aufnahmeplatz 23 angepasst werden. An einer Eingabeeinrichtung für die Steuerung der Beladeeinrichtung kann das gewünschte Programm ausgewählt oder im einfachsten Fall die gewünschte Verlademenge eingestellt werden. Die Beladeeinrichtung kann z. B. über die Sensoren 39, 41 und 42 oder über zusätzliche optische Sensoren oder Kamera(s) zu Beginn die Ladefläche 301 und die mögliche Ladehöhe eines Transportmittels 300 vermessen. Anhand der aufgenommenen Daten berechnet die Steuerung die Platzierung und Orientierung der abzulegenden Säcke und ermittelt ein geeignetes Muster. Auf Wunsch können auch zunächst Paletten auf der Ladefläche angeordnet werden, die dann beladen werden. Dabei können unterschiedliche Lagenbilder auf der Ladefläche direkt oder auf darauf angeordneten (leeren) Paletten aufeinander gestapelt werden. Es kann auf Wunsch eine derartige Orientierung unterschiedlicher Lagenbilder übereinander eingestellt werden, um eine Verzahnung der Säcke zu erreichen, was zu einer erhöhten Stabilität der Sackstapel führt.

Falls die Steuerung ermittelt, dass die gewünschte Anzahl an Säcken nicht auf der Ladefläche abgelegt werden kann, wird ein Warnhinweis ausgegeben. Auf Wunsch können die Lagenbilder angepasst werden. Wird der zur Verfügung stehende Laderaum nicht zu 100% ausgenutzt, wird eine solche Verteilung der Säcke vorgenommen, dass kein Verrutschen der Ladung zu erwarten ist. Dazu kann z. B. die Anzahl der gestapelten Lagen reduziert werden und dafür die gesamte Ladefläche ausgenutzt werden.

Die Beladeeinrichtung verfügt über die Sensoren 38 und 39, mit denen es auch möglich ist, die Höhe jeder einzelnen schon abgelegten Lage zu erfassen. Daraus wird die Höhe der folgenden Lage berechnet und die Höhe der Abgabeeinrichtung wird entsprechend angepasst. Beispielsweise können die Säcke durch das Pressband 54 oder durch die darauf abgelegten Säcke gestaucht werden, sodass die Höhe eines Sacks 3 bzw. einer Lage anders ist als geplant. Derartige Änderungen pflanzen sich über mehrere Lagen fort, sodass die Höhe der z. B. 6. Lage entsprechende Unterschiede aufweisen kann. Das wird hier berücksichtigt.

Eine insbesondere von der Winkelstellung des Beschleunigungsförderers abhängige lagegenaue Drehung der Säcke kann auch erst auf der Abgabeeinrichtung erfolgen. Die Abgabeeinrichtung 6 kann dazu mit kontinuierlich oder stufenweise im Durchmesserveränderbaren Kegelrollen ausgestattet, die während des Verschwenkens des Beschleunigungsförderers 5 in ihren Durchmesser- und Winkelverhältnissen verändert werden und so den Säcken eine definierte Längsorientierung geben.

Insgesamt ermöglicht die Erfindung eine vollautomatische Beladung von Transportmitteln mit Transportgütern wie insbesondere flexibel ausgebildeten Säcken 3. Eine Ausrichtung der einzelnen Säcke von Hand ist nicht nötig.

**Bezugszeichenliste:**

| | | | |
|---|---|---|---|
| 1 | Beladeeinrichtung | 29 | Ballastaufnahme |
| 2 | Transportgut | 30 | Rollenbahn von 6 |
| 3 | Sack | 31 | Transportband von 30 |
| 4 | Zuführeinrichtung | 32 | Rolle von 30 |
| 5 | Beschleunigungsförderer | 33 | Trennlinie |
| 6 | Abgabeeinrichtung | 34 | Öffnung in 29 |
| 7 | Abgabeende | 35 | Höhenverstellung |
| 8 | Längsrichtung von 5 | 36 | Sensor |
| 9 | Längenversatz | 37 | Antrieb |
| 10 | horizontale Achse | 38 | Sensor |
| 11 | Abgabehöhe | 39 | Höhensensor |
| 12 | vertikale Achse | 40 | Sackzubringer |
| 13 | seitliche Stellung von 6 | 41 | Seitensensor |
| 14 | Übergabeeinrichtung | 42 | Abstandssensor |
| 15 | Fahrwagen | 43 | Drehpunkt von 6 |
| 16 | seitliche Position von 2 | 44 | Koppeleinheit |
| 17 | seitlicher Schwenkbereich | 45 | Einstelleinheit |
| 18 | Querrichtung, seitliche Richtung quer zu 8 | 50 | Packmaschine |
| | | 51 | Reinigungsstation |
| 19 | Transportband, Förderriemen | 52 | Kontrollwaage |
| | | 53 | Laderampe |
| 20 | Transportband, Förderriemen | 54 | Pressband |
| | | 55 | Sackrutsche |
| 21 | Reihe von 3 | 100 | Vorrichtung |
| 22 | Grundposition | 201 | Transportfläche |
| 23 | Aufnahmeplatz von 2 | 211 | Schiene |
| 24 | Rollenbahn von 14 | 300 | Transportmittel, LKW |
| 25 | Ende von 5 | 301 | Ladefläche |
| 26 | Rolle von 24 | 302 | Wand |
| 27 | Parallelogrammführung | | |
| 28 | Dreheinrichtung | | |

## Patentansprüche

1. Verfahren zum Beladen von Ladeflächen (301) von auf einer Transportfläche (201) beweglichen Transportmitteln (300) mit Transportgütern (2) wie Säcken (3) oder anderen Stückgütern, wobei über eine Zuführeinrichtung (4) Transportgüter (2) nacheinander antransportiert und zum Weitertransport einem nachgeschalteten Beschleunigungsförderer (5) übergeben und schließlich an einem Abgabeende (7) einer Abgabeeinrichtung (6) einzeln an die Ladefläche (301) des beweglichen Transportmittels (300) abgegeben werden, wobei zur mit einer Steuerung gesteuerten automatischen benachbarten Ablage einer Reihe (21) von Transportgütern (2) auf der Ladefläche (301) des beweglichen Transportmittels (300) der Beschleunigungsförderer (5) gegenüber einer Grundposition (22) in Längsrichtung (8) seitlich verschwenkt und das Abgabeende (7) der Abgabeeinrichtung (6) in der Längsrichtung (8) entsprechend bewegt wird, um einen automatischen Längenausgleich für einen durch die Schwenkbewegung des Beschleunigungsförderers (5) bewirkten Längenversatz (9) und insbesondere eine dichte Beladung der Ladefläche (301) zu emöglichen, **dadurch gekennzeichnet, dass** der Beschleunigungsförderer (5) ein Transportgut (2) mit einem Antrieb (37) durch die Steuerung gesteuert stärker beschleunigt, wenn es in einer seitlichen Position (16) positioniert werden soll, die wenigstens teilweise außerhalb des seitlichen Schwenkbereiches (17) der Abgabeeinrichtung (6) liegt.

2. Verfahren nach dem vorhergehenden Anspruch, wobei der Beschleunigungsförderer (5) die Transportgüter (2) schneller transportiert als die Zuführeinrichtung (4).

3. Verfahren nach einem der vorhergehenden Ansprüche, wobei der Beschleunigungsförderer (5) um eine im Wesentlichen horizontale Achse (10) verschwenkt wird, um eine Abgabehöhe (11) der Abgabeeinrichtung (6) zu beeinflussen und/oder wobei der Beschleunigungsförderer (5) um eine im Wesentlichen vertikale Achse (12) verschwenkt wird, um eine seitliche Stellung (13) der Abgabeeinrichtung (6) einzustellen.

4. Verfahren nach einem der vorhergehenden Ansprüche, wobei das Transportgut (2) seine Ausrichtung zu einer Ladekante der Ladefläche unabhängig von einem Schwenkwinkel des Beschleunigungsförderers (5) beibehält, auch wenn der Beschleunigungsförderer (5) verschwenkt wird.

5. Verfahren nach einem der vorhergehenden Ansprüche, wobei der Beschleunigungsförderer (5) seitlich verschwenkt wird, bevor das Transportgut (2) dem Beschleunigungsförderer (5) übergeben wird und/oder wobei der Beschleunigungsförderer (5) während der Ablage einer Reihe (21) von Transportgütern (2) kontinuierlich verschwenkt wird.

6. Verfahren nach einem der vorhergehenden Ansprüche, wobei das das Transportgut (2) auf dem Beschleunigungsförderer (5) ausgerichtet wird.

7. Verfahren nach einem der vorhergehenden Ansprüche, wobei das Transportgut (2) auf dem Beschleunigungsförderer (5) über eine gezielte separate Ansteuerung von wenigstens zwei benachbarten Förderriemen (19, 20) ausgerichtet wird.

8. Verfahren nach einem der vorhergehenden Ansprüche, wobei der Beschleunigungsförderer (5) teleskopiert wird, um den Längenversatz (9) auszugleichen.

9. Verfahren nach einem der vorhergehenden Ansprüche, wobei die Abgabeeinrichtung (6) an dem Beschleunigungsförderer (5) ausgefahren und wieder eingefahren werden kann und/oder wobei der Beschleunigungsförderer (5) und/oder die Beladeeinrichtung in Längsrichtung verfahren werden und/oder wobei mehrere Reihen (21) von Transportgütern (2) in Längsrichtung 88) oder Querrichtung (18) oder wechselweise (8) zu einer Lage aneinander gereiht werden und wobei die Reihen treppenartig gestapelt werden.

10. Beladeeinrichtung (1) zum Beladen von Ladeflächen (301) von auf einer Transportfläche (201) beweglichen Transportmitteln (300) mit Transportgütern (2) wie Säcken (3) oder anderen Stückgütern,
umfassend eine Steuerung und eine Zuführeinrichtung (4), um die Transportgüter (2) nacheinander anzutransportieren, und einen nachgeschalteten Beschleunigungsförderer (5), dem die Transportgüter (2) zum Weitertransport übergeben werden, und eine Abgabeeinrichtung (6) mit einem Abgabeende (7), an dem die Transportgüter (2) einzeln an die Ladefläche (301) des beweglichen Transportmittels (300) abgegeben werden, wobei zur automatischen benachbarten Ablage einer Reihe von Transportgütern (2) auf der Ladefläche (301) des beweglichen Transportmittels (300) der Beschleunigungsförderer (5) gegenüber einer Grundposition in Längsrichtung (8) seitlich automatisch verschwenkbar und das Abgabeende (7) der Abgabeeinrichtung (6) in der Längsrichtung (8) entsprechend automatisch bewegbar ist, um einen automatischen Längenausgleich für einen durch die Schwenkbewegung des Beschleunigungsförderers (5) bewirkten Längenversatz (9) und eine dichte Beladung der Ladefläche (301) zu ermöglichen, **dadurch gekennzeichnet, dass** der Beschleunigungsförderer (5) einen Antrieb (37) umfasst und dazu eingerichtet und ausgebildet ist, ein Transportgut (2) durch die Steuerung gesteuert stärker zu beschleunigen, wenn es in einer seitlichen Position (16) positioniert werden soll, die wenigstens teilweise außerhalb des seitlichen Schwenkbereiches (17) der Abgabeeinrichtung (6) liegt.

11. Beladeeinrichtung (1) nach dem vorhergehenden Anspruch, wobei zwischen der Zuführeinrichtung (4) und dem Beschleunigungsförderer (5) eine Übergabeeinrichtung (14) vorgesehen ist, mit welcher der Beschleunigungsförderer (5) von der Zuführeinrichtung (4) entkoppelt wird und wobei insbesondere die Übergabeeinrichtung (14) eine Rollenbahn (24) mit mehreren Rollen (26) umfasst, wobei wenigstens eine Mehrzahl der Rollen (26) der Rollenbahn (24) der Übergabeeinrichtung (14) nicht angetrieben ist und wobei vorzugsweise das Ende des Beschleunigungsförderers (5), an welchem die Abgabeeinrichtung (6) angeordnet ist, in der Höhe gegenüber der Übergabeeinrichtung (14) verschwenkbar ist.

12. Beladeeinrichtung (1) nach einem der zwei vorhergehenden Ansprüche, wobei der Beschleunigungsförderer (5) höhenverstellbar ist und die Abgabeeinrichtung (6) über eine Art von Parallelogrammführung (27) geführt wird, sodass die Abgabeeinrichtung (6) bei einer Höhenverstellung des Beschleunigungsförderers (5) ihre Ausrichtung im Wesentlichen beibehält und/oder wobei die Abgabeeinrichtung (6) mit dem Ende des Beschleunigungsförderers (5) räumlich gegenüber der Übergabeeinrichtung verschwenkbar ist.

13. Beladeeinrichtung (1) nach einem der drei vorhergehenden Ansprüche, wobei dem Beschleunigungsförderer (5) eine Sackdreheinrichtung (28) zugeordnet ist und/oder wobei die Zuführeinrichtung (4) und/oder der Beschleunigungsförderer (5) wenigstens ein Transportband (19, 20) umfassen.

14. Beladeeinrichtung (1) nach einem der vier vorhergehenden Ansprüche, wobei die Abgabeeinrichtung (6) eine Rollenbahn (30) aufweist und wobei insbesondere die Rollenbahn (30) der Abgabeeinrichtung (6) ein Transportband (31) und/oder wenigstens eine angetriebene Rolle (32) umfasst und/oder umfassend einen Sackzubringer (40) zum Antransport der Transportgüter (2) und zur Übergabe der Transportgüter (2) an die Zuführeinrichtung (4).

## Claims

1. Method for loading cargo areas (301) of means of transport (300) movable on a transport area (201) with cargo (2) such as bags (3) or other packaged goods,
wherein cargo items (2) are successively supplied by way of a feeding device (4) and transferred to a downstream acceleration conveyor (5) for transporting further and at a delivery end (7) of a delivery device (6) they are finally delivered one by one to the cargo area (301) of the movable means of transport (300), wherein for automatic, adjoining deposit, controlled by a controller, of a row (21) of cargo items (2) on the cargo area (301) of the movable means of transport (300), the acceleration conveyor (5) is laterally pivoted in the longitudinal direction (8) relative to a base position (22) and the delivery end (7) of the delivery device (6) is correspondingly moved in the longitudinal direction (8) to enable an automatic longitudinal compensation for a longitudinal offset (9) caused by the pivoting motion of the acceleration conveyor (5) and in particular to enable high load density on the cargo area (301), **characterized in**
**that** by means of a drive (37) controlled by the controller, the acceleration conveyor (5) accelerates a cargo item (2) faster if it is to be positioned in a lateral position (16) which lies at least partially outside the lateral pivoting range (17) of the delivery device (6).

2. The method according to the preceding claim, wherein the acceleration conveyor (5) transports the cargo (2) faster than does the feeding device (4).

3. The method according to any of the preceding claims, wherein the acceleration conveyor (5) is pivoted around a substantially horizontal axis (10) to influence a delivery height (11) of the delivery device (6),
and/or wherein the acceleration conveyor (5) is pivoted around a substantially vertical axis (12) to set a lateral position (13) of the delivery device (6).

4. The method according to any of the preceding claims, wherein the cargo (2) maintains its orientation relative to a loading edge of the cargo area independently of an angle of rotation of the acceleration conveyor (5) even while the acceleration conveyor (5) is pivoted.

5. The method according to any of the preceding claims, wherein the acceleration conveyor (5) is laterally pivoted before the cargo (2) is transferred to the acceleration conveyor (5), and/or wherein the acceleration conveyor (5) pivots continuously while a row (21) of cargo items (2) is being deposited.

6. The method according to any of the preceding claims, wherein the cargo (2) is being aligned on the acceleration conveyor (5).

7. The method according to any of the preceding claims, wherein the cargo (2) is aligned on the acceleration conveyor (5) by way of controlled, separate driving of at least two adjoining conveyor straps (19, 20).

8. The method according to any of the preceding claims, wherein the acceleration conveyor (5) is extended to compensate the longitudinal offset (9).

9. The method according to any of the preceding claims, wherein the delivery device (6) on the acceleration conveyor (5) can be extended and retracted,
and/or wherein the acceleration conveyor (5) and/or the loading device are displaced in the longitudinal direction, and/or wherein a number of rows (21) of cargo items (2) are lined up in the longitudinal direction 88) or transverse direction (18) or alternately (8) to form a layer and wherein the rows are stacked step-like.

10. Loading device (1) for loading cargo areas (301) of means of transport (300) movable on a transport area (201) with cargo items (2) such as bags (3) or other packaged goods,
comprising a controller and a feeding device (4) for successively supplying the cargo (2), and a downstream acceleration conveyor (5) to which the cargo items (2) are transferred for transporting further, and a delivery device (6) having a delivery end (7) where the cargo items (2) are delivered one by one to the cargo area (301) of the movable means of transport (300),
wherein for automatic adjoining deposit of a row of cargo items (2) on the cargo area (301) of the movable means of transport (300), the acceleration conveyor (5) is automatically laterally pivotable in the longitudinal direction (8) relative to a base position and the delivery end (7) of the delivery device (6) is correspondingly automatically movable in the longitudinal direction (8) to enable an automatic longitudinal compensation for a longitudinal offset (9) caused by the pivoting motion of the acceleration conveyor (5) and to enable high load density on the cargo area (301),
**characterized in**
**that** the acceleration conveyor (5) comprises a drive (37) and is set up and configured, controlled by the controller, to accelerate a cargo item (2) faster if it is to be positioned in a lateral position (16) which lies at least partially outside the lateral pivoting range (17) of the delivery device (6).

11. The loading device (1) according to the preceding claim, wherein between the feeding device (4) and the acceleration conveyor (5) a transfer device (14) is provided with which to decouple the acceleration conveyor (5) from the feeding device (4),
and wherein in particular the transfer device (14) comprises a roller track (24) having multiple rollers (26), wherein at least a plurality of the rollers (26) of the roller track (24) of the transfer device (14) is not driven,
and wherein preferably the end of the acceleration conveyor (5) where the delivery device (6) is disposed, is vertically pivotable relative to the transfer device (14).

12. The loading device (1) according to any of the two preceding claims, wherein the acceleration conveyor (5) is vertically adjustable and the delivery device (6) is guided by a parallelogram-type guide (27) so that when the acceleration conveyor (5) is vertically adjusted the delivery device (6) substantially maintains its orientation, and/or wherein the delivery device (6) with the end of the acceleration conveyor (5) can be pivoted spatially relative to the transfer device.

13. The loading device (1) according to any of the three preceding claims, wherein a bag rotating device (28) is assigned to the acceleration conveyor (5), and/or wherein the feeding device (4) and/or the acceleration conveyor (5) comprise at least one conveyor belt (19, 20).

14. The loading device (1) according to any of the four preceding claims, wherein the delivery device (6) comprises a roller track (30), and wherein in particular the roller track (30) of the delivery device (6) comprises a conveyor belt (31) and/or at least one driven roller (32), and/or comprising a bag feeder (40) for supplying the cargo (2) and for transferring the cargo (2) to the feeding device (4).

## Revendications

1. Procédé destiné à charger, de produits à transporter (2) tels que sacs (3) ou d'autres produits de détail, des plateformes de chargement (301) de moyens de transport (300) mobiles sur une surface de transport (201), dans lequel des produits à transporter (2) sont amenés les uns après les autres par un dispositif d'alimentation (4) et sont transférés, pour un transport ultérieur, à un convoyeur d'accélération (5) situé en aval et sont délivrés enfin, à une extrémité de distribution (7) d'un dispositif de distribution (6), individuellement à la plateforme de chargement (301) du moyen de transport (300) mobile, dans lequel, pour déposer de façon voisine, automatique et commandée par une commande, une rangée (21) de produits à transporter (2) sur la plateforme de chargement (301) du moyen de transport (300) mobile, on fait pivoter ledit convoyeur d'accélération (5) latéralement dans une direction longitudinale par rapport à une position de base, et ladite extrémité de distribution (7) du dispositif de distribution (6) est déplacée de manière correspondante dans la direction longitudinale (8) afin de permettre une compensation automatique de longueur pour un décalage en longueur (9) provoqué par le mouvement de pivotement du convoyeur d'accélération (5), et en particulier un chargement serré de la plateforme de chargement (301),
**caractérisé par le fait que** le convoyeur d'accélération (5) accélère plus fortement, de façon commandée par la commande, un produit à transporter (2) à l'aide d'un entraînement (37), si celui-ci doit être positionné dans une position latérale (16) qui est située au moins en partie en dehors de la plage de pivotement (17) latérale du dispositif de distribution (6).

2. Procédé selon la revendication précédente, dans lequel le convoyeur d'accélération (5) transporte les produits à transporter (2) plus rapidement que le dispositif d'alimentation (4).

3. Procédé selon l'une quelconque des revendications précédentes, dans lequel le convoyeur d'accélération (5) est pivoté autour d'un axe (10) pour l'essentiel horizontal afin d'influer sur une hauteur de distribution (11) du dispositif de distribution (6)
et/ou dans lequel le convoyeur d'accélération (5) est pivoté autour d'un axe (12) pour l'essentiel vertical afin de régler une position latérale (13) du dispositif de distribution (6).

4. Procédé selon l'une quelconque des revendications précédentes, dans lequel le produit à transporter (2) garde son orientation par rapport à un bord de chargement de la plateforme de chargement quel que soit l'angle de pivotement du convoyeur d'accélération (5), même si le convoyeur d'accélération (5) est pivoté.

5. Procédé selon l'une quelconque des revendications précédentes, dans lequel le convoyeur d'accélération (5) est pivoté latéralement avant que le produit à transporter (2) soit transféré au convoyeur d'accélération (5) et/ou dans lequel le convoyeur d'accélération (5) est pivoté en continu pendant qu'une rangée (21) de produits à transporter (2) est déposée.

6. Procédé selon l'une quelconque des revendications précédentes, dans lequel le produit à transporter (2) est aligné sur le convoyeur d'accélération (5).

7. Procédé selon l'une quelconque des revendications précédentes, dans lequel le produit à transporter (2) est aligné sur le convoyeur d'accélération (5) par l'intermédiaire d'une commande séparée ciblée d'au moins deux courroies de transport (19, 20) adjacentes.

8. Procédé selon l'une quelconque des revendications précédentes, dans lequel le convoyeur d'accélération (5) est télescopé pour compenser le décalage en longueur (9).

9. Procédé selon l'une quelconque des revendications précédentes, dans lequel le dispositif de distribution (6) peut être déployé et rétracté sur le convoyeur d'accélération (5) et/ou dans lequel le convoyeur d'accélération (5) et/ou le dispositif de chargement sont déplacés dans la direction longitudinale et/ou dans lequel plusieurs rangées (21) de produits à transporter (2) sont enchainées dans la direction longitudinale (8) ou la direction transversale (18) ou alternativement (8) pour former une couche, et dans lequel les rangées sont empilées à la manière d'un escalier.

10. Dispositif (1) destiné à charger, de produits à transporter (2) tels que sacs (3) ou d'autres produits de détail, des plateformes de chargement (301) de moyens de transport (300) mobiles sur une surface de transport (201), comprenant une commande et un dispositif d'alimentation (4) pour amener les produits à transporter (2) les uns après les autres, et un convoyeur d'accélération (5) situé en aval auquel les produits à transporter (2) sont transférés pour un transport ultérieur, ainsi qu'un dispositif de distribution (6) ayant une extrémité de distribution (7) à laquelle les produits à transporter (2) sont délivrés individuellement à la plateforme de chargement (301) du moyen de transport (300) mobile, dans lequel, pour déposer de façon voisine et automatique une rangée de produits à transporter (2) sur la plateforme de chargement (301) du moyen de transport (300) mobile, on peut faire pivoter ledit convoyeur d'accélération (5) latéralement automatiquement dans la direction longitudinale (8) par rapport à une position de base, et ladite extrémité de distribution (7) du dispositif de distribution (6) peut être déplacée automatiquement de manière correspondante dans la direction longitudinale (8) afin de permettre une compensation automatique de longueur pour un décalage en longueur (9) provoqué par le mouvement de pivotement du convoyeur d'accélération (5), et un chargement serré de la plateformede chargement (301),
**caractérisé par le fait que** le convoyeur d'accélération (5) comprend un entraînement (37) et est agencé et conçu pour accélérer plus fortement, de façon commandée par la commande, un produit à transporter (2), si celui-ci doit être positionné dans une position latérale (16) qui est située au moins en partie en dehors de la plage de pivotement (17) latérale du dispositif de distribution (6).

11. Dispositif de chargement (1) selon la revendication précédente, dans lequel un dispositif de transfert (14) est prévu entre le dispositif d'alimentation (4) et le convoyeur d'accélération (5), par l'intermédiaire duquel le convoyeur d'accélération (5) est découplé du dispositif d'alimentation (4) et dans lequel, en particulier, le dispositif de transfert (14) comprend un convoyeur à rouleaux (24) ayant une pluralité de rouleaux (26), dans lequel au moins une pluralité des rouleaux (26) du convoyeur à rouleaux (24) du dispositif de transfert (14) n'est pas entraînée
et dans lequel, de préférence, l'extrémité du convoyeur d'accélération (5) à laquelle est disposé le dispositif de distribution (6) peut pivoter en hauteur par rapport au dispositif de transfert (14).

12. Dispositif de chargement (1) selon l'une quelconque des deux revendications précédentes, dans lequel le convoyeur d'accélération (5) est réglable en hauteur et le dispositif de distribution (6) est guidé par un type de guide en parallélogramme (27) de sorte que le dispositif de distribution (6) garde pour l'essentiel son orientation lorsque le convoyeur d'accélération (5) est réglé en hauteur et/ou dans lequel le dispositif de distribution (6) peut pivoter dans l'espace, avec l'extrémité du convoyeur d'accélération (5), par rapport au dispositif de transfert.

13. Dispositif de chargement (1) selon l'une quelconque des trois revendications précédentes, dans lequel un dispositif de rotation de sac (28) est associé au convoyeur d'accélération (5) et/ou dans lequel le dispositif d'alimentation (4) et/ou le convoyeur d'accélération (5) comprennent au moins une bande transporteuse (19, 20).

14. Dispositif de chargement (1) selon l'une quelconque des quatre revendications précédentes, dans lequel le dispositif de distribution (6) comprend un convoyeur à rouleaux (30) et dans lequel, en particulier, le convoyeur à rouleaux (30) du dispositif de distribution (6) comprend une bande transporteuse (31) et/ou au moins un rouleau entraîné (32), et/ou comprenant un dispositif d'amenée de sacs (40) pour amener les produits à transporter (2) et pour transférer les produits à transporter (2) au dispositif d'alimentation (4).
